# FASCICULE DE BREVET EUROPEEN

(11) **EP 3 614 580 B1**
(45) Date de publication et mention de la délivrance du brevet: **29.09.2021**
(21) Numéro de dépôt: 19191111.4
(22) Date de dépôt: 09.08.2019
(51) Int. Cl.: H04B 10/272, H04Q 11/00, H04J 14/02

(54) **CIRCUIT DE CONNEXION D'UN RESEAU LOCAL A UNE FIBRE OPTIQUE SUR LAQUELLE SONT SUSCEPTIBLES DE CHEMINER DES SIGNAUX LUMINEUX CONFORMES A DES STANDARDS DE COMMUNICATION OPTIQUE DIFFERENTS**
VERBINDUNG ZUM KOPPELN EINEM LOKALEN NETZWERK MIT EINER OPTISCHEN FASER, DIE OPTISCHE SIGNALE UNTERSCHIEDLICHER KOMMUNIKATIONSSTANDARDS TRANSPORTIEREN KANN
CONNECTOR FOR COUPLING A LOCAL NETWORK TO AN OPTICAL FIBER CAPABLE OF TRANSPORTING OPTICAL SIGNALS OF DIFFERENT COMMUNICATION STANDARDS

(30) Priorité: 22.08.2018 FR 1857602
(43) Date de publication de la demande: 26.02.2020
(73) Titulaire: SAGEMCOM BROADBAND SAS, 92500 Rueil Malmaison (FR)
(72) Inventeur: JAULIN, Jean-Philippe, 92500 Rueil Malmaison (FR); HARDY, Mikaël, 92500 Rueil Malmaison (FR)
(74) Mandataire: Lavaud, Thomas

(56) Documents cités:
- US-A1- 2009 245 790
- US-A1- 2011 103 792
- US-B2- 9 338 530
- "10-Gigabit-capable passive optical networks (XG-PON): General requirements; G.987.1 (01/10)", ITU-T STANDARD, INTERNATIONAL TELECOMMUNICATION UNION, GENEVA ; CH, no. G.987.1 (01/10), 13 janvier 2010 (2010-01-13), pages 1-52, XP017436351,

## Description

L'invention concerne le domaine des circuits de connexion d'un réseau local à une fibre optique sur laquelle sont susceptibles de cheminer des signaux lumineux conformes à des standards de communication optique différents.

### ARRIERE PLAN DE L'INVENTION

Grâce aux réseaux FTTH (pour *Fiber To The Home*), de nombreux abonnés bénéficient désormais d'un accès Internet à très haut débit. Dans un réseau FTTH, la fibre optique arrive jusque chez les abonnés.

Il est possible de faire cohabiter sur une même fibre optique plusieurs standards de communication optique, et ainsi de permettre à un opérateur de distribuer plusieurs services au travers d'une infrastructure réduite.

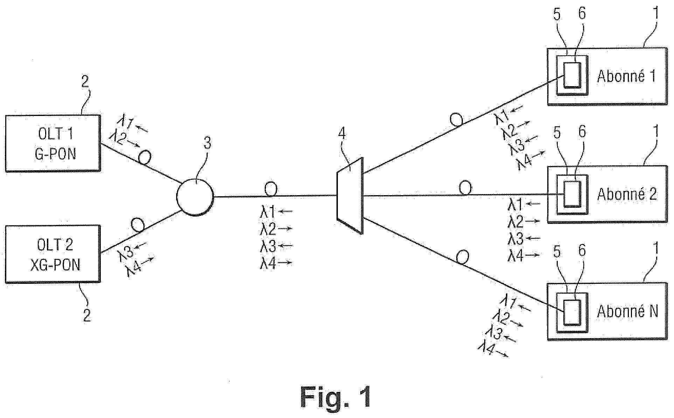

En référence à la figure 1, une telle infrastructure réduite, qui permet d'apporter le réseau Internet à des abonnés 1, comprend une pluralité d'équipements de terminaison 2 de type OLT (pour *Optical Line Terminal*), un dispositif de couplage de longueurs d'ondes 3, et un dispositif de couplage de lignes optiques d'abonnés 4.

Parmi ces standards de communication optique, on trouve par exemple le standard G-PON (pour *Gigabit-Passive Optical Network*) qui permet le transport de 2,5Gbps dans le sens descendant et de 1,2Gbps dans le sens montant. Le standard G-PON est décrit tant au niveau matériel qu'au niveau protocolaire par la norme ITU-T G.984 et par chacune de ses sous-publications. On trouve aussi le standard XG-PON (pour *eXtended-Gigabit Passive Optical Network*) qui permet le transport de 10Gbps dans le sens descendant et de 2,5Gbps dans le sens montant. Le standard XG-PON est décrit par la norme ITU-T G.988.

Chacun de ces standards de communication optique met en œuvre des flux lumineux dont les longueurs d'onde (λ) sont précisément définies par la norme caractérisant le standard. Ainsi, le standard G-PON est basé sur des signaux lumineux dans le sens descendant dont la longueur d'onde λ2 est égale à 1490nm, et sur des signaux lumineux dans le sens montant dont la longueur d'onde λ1 est égale à 1310nm. Le standard XG-PON utilise des signaux lumineux dans le sens descendant dont la longueur d'onde λ4 est égale à 1577nm, et des signaux lumineux dans le sens montant dont la longueur d'onde λ3 est égale à 1270nm.

Il existe par ailleurs d'autres standards de communication optique mettant en œuvre des signaux lumineux basés sur des longueurs d'ondes différentes ou sur des « peignes » de longueurs d'ondes (le signal lumineux dans une direction est composé d'un ensemble de signaux combinés ou non, et répartis sur plusieurs longueurs d'ondes).

Chaque abonné 1 est équipé d'une passerelle Internet 5 comprenant une interface optique-électrique 6 permettant l'échange de signaux lumineux pour mettre en œuvre les standards de communication optique. Une interface optique-électrique 6 comporte classiquement un émetteur comprenant une diode laser qui génère des signaux lumineux à partir de signaux électriques contenant des informations à transmettre, et un récepteur comprenant une photodiode pour convertir des signaux lumineux reçus en signaux électriques utilisables.

La diode laser génère des signaux lumineux monofréquentiels très purs. Par ailleurs, pour immuniser le récepteur vis-à-vis des autres signaux lumineux présents sur la fibre optique, il est commun d'utiliser un filtre optique correspondant exactement à la longueur d'onde des signaux lumineux à recevoir.

Ces composants sont communément regroupés au sein d'un macro-composant de type BOSA (pour *Bidirectionnal Optical Sub Assemby*) conçu spécifiquement pour interfacer un standard de communication optique particulier et donc une paire de longueurs d'ondes, et donc immunisé et incompatible avec un quelconque autre standard de communication optique.

On comprend donc que chaque passerelle est adaptée pour communiquer selon un unique standard de communication optique, et qu'il semble extrêmement complexe de permettre à l'abonné ou à l'opérateur, sans changer la passerelle, de choisir un autre standard de communication optique parmi ceux présents sur la fibre optique.

On note que les normes définissant les standards de communication optique ont été définies à partir de cas réels de terrain en matière de composants disponibles et de performances associées, et définissent donc des performances aux limites, notamment en limite de portée optique, qui ne laissent quasiment aucune latitude aux fabricants de composants en matière d'amélioration de sensibilité. Le document US20090245790 divulgue un système PON dans lequel des signaux provenant d'ONU avec des normes différentes et des longueurs d'onde différentes sont transmis à un OLT qui a deux interfaces PON, dont chacune traite les informations PON selon une norme PON différente. Les sorties de celles-ci sont transmises à un commutateur qui est commandé pour sortir les signaux de l'une des interfaces PON.

### OBJET DE L'INVENTION

L'invention a pour objet de permettre, avec une même passerelle Internet, de sélectionner un standard de communication optique à utiliser parmi une pluralité de standards présents sur une même fibre optique raccordée à la passerelle.

### RESUME DE L'INVENTION

En vue de la réalisation de ce but, on propose un circuit de connexion agencé pour raccorder au moins un équipement électrique situé en aval du circuit de connexion, à une fibre optique située en amont du circuit de connexion et sur laquelle sont susceptibles de cheminer des signaux lumineux de longueurs d'onde différentes et conformes à des standards de communication optique différents, le circuit de connexion comportant un multiplexeur en longueur d'onde comprenant un port amont destiné à être relié à la fibre optique et une pluralité de ports aval, une pluralité d'interfaces optiques-électriques compatibles chacune avec au moins un standard de communication optique et ayant chacune un port optique relié à l'un des ports aval du multiplexeur en longueur d'onde et un port électrique, un composant électrique de traitement comprenant un port de communication via lequel le composant électrique de traitement est agencé pour émettre et/ou recevoir des signaux électrique, et un commutateur piloté par le composant électrique de traitement et agencé pour sélectivement relier le port de communication du composant électrique de traitement à un port électrique de l'une des interfaces optiques-électriques.

Le circuit de connexion selon l'invention peut être intégré dans une passerelle Internet et permet de connecter sélectivement l'équipement électrique, qui appartient par exemple à un réseau local d'un abonné, à l'un des standards de communication optique présents sur la fibre optique.

On note que le circuit de connexion est simple à mettre en oeuvre, nécessite un nombre réduit de composants et est donc peu coûteux.

On propose de plus une passerelle Internet comportant un circuit de connexion tel que celui qui vient d'être décrit.

On propose en outre un procédé de gestion de communication mis en œuvre dans un circuit de connexion tel que celui qui vient d'être décrit, comportant une phase de sondage comprenant les étapes, mises en oeuvre successivement pour chaque interface optique-électrique, de tenter de détecter la présence sur la fibre optique de signaux lumineux descendants conformes à un standard de communication optique avec lequel est compatible ladite interface optique-électrique, une phase de choix comprenant l'étape de choisir un standard de communication optique particulier à partir d'un résultat de la phase de sondage, et une phase de sélection comprenant l'étape de faire piloter le commutateur par le composant électrique de traitement de manière à relier le port de communication du composant électrique de traitement au port électrique d'une interface optique-électrique compatible avec le standard de communication optique particulier choisi.

On propose de plus un programme d'ordinateur comprenant des instructions pour mettre en œuvre, par un composant électrique de traitement d'une passerelle Internet, un procédé de gestion de communication tel que celui qui vient d'être décrit.

On propose par ailleurs des moyens de stockage, caractérisés en ce qu'ils stockent un programme d'ordinateur comprenant des instructions pour mettre en œuvre, par un composant électrique de traitement d'une passerelle Internet, un procédé de gestion de communication tel que celui qui vient d'être décrit.

L'invention sera mieux comprise à la lumière de la description qui suit d'un mode de mise en œuvre particulier non limitatif de l'invention.

### BREVE DESCRIPTION DES DESSINS

Il sera fait référence aux dessins annexés, parmi lesquels :
- la figure 1 représente un réseau de communication optique de l'art antérieur ;
- la figure 2 représente un circuit de connexion selon l'invention ;
- la figure 3 représente un multiplexeur en longueur d'onde ;
- la figure 4 illustre le fonctionnement du multiplexeur en longueur d'onde ;
- la figure 5 représente une interface optique-électrique du circuit de connexion ;
- la figure 6 représente un composant électrique de traitement du circuit de connexion ;
- la figure 7 représente des phases d'un procédé de gestion de communication mis en oeuvre dans le circuit de connexion ;
- la figure 8 représente des étapes d'une phase de sondage ;
- la figure 9 représente des étapes d'une première phase de sondage complémentaire ;
- la figure 10 représente des étapes d'une deuxième phase de sondage complémentaire.

### DESCRIPTION DETAILLEE DE L'INVENTION

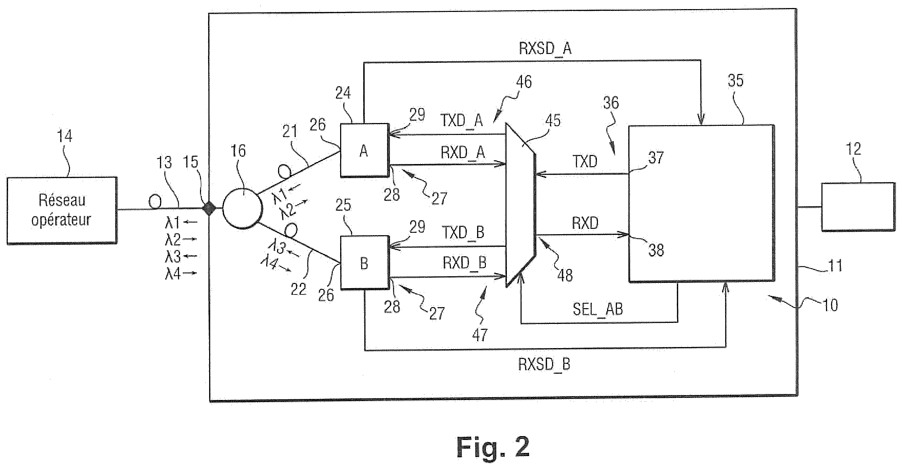

En référence à la figure 2, le circuit de connexion selon l'invention 10 est ici intégré dans une passerelle Internet 11. Le circuit de connexion 10 est utilisé pour raccorder un réseau local d'un abonné, comprenant au moins un équipement électrique 12 et situé en aval du circuit de connexion 10, à une fibre optique 13 située en amont du circuit de connexion 10. La fibre optique 13 est aussi connectée à un réseau opérateur 14 situé en amont de la fibre optique 13 et comprenant une pluralité d'équipements de terminaison de type OLT. Par « amont », on entend ici du côté du réseau opérateur, et par « aval », on entend ici du côté de l'abonné.

Des signaux lumineux de longueurs d'onde différentes et conformes à des standards de communication optique différents sont susceptibles de cheminer sur la fibre optique 13. Les standards de communication optique comprennent ici le standard G-PON, le standard XG-PON et le standard XGS-PON.

Le circuit de connexion 10 comporte tout d'abord un raccord optique 15 dans lequel est enfichée la fibre optique 13.

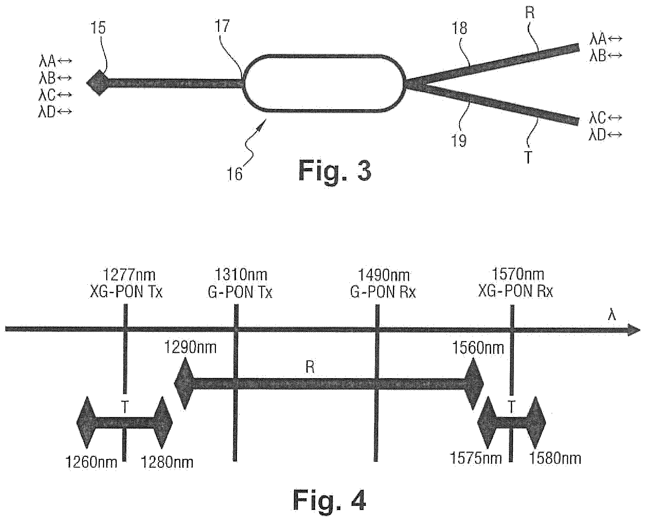

En référence à la figure 3, le circuit de connexion 10 comporte de plus un multiplexeur en longueur d'onde 16.

Le multiplexeur en longueur d'onde 16 comprend un port amont 17 connecté au raccord optique 15 et donc à la fibre optique 13, et une pluralité de ports aval, ici un premier port aval 18 et un deuxième port aval 19.

Le multiplexeur en longueur d'onde 16 permet de séparer des signaux lumineux descendants cheminant sur la fibre optique 13 en signaux lumineux descendants cheminant sur une branche T et sur une branche R. Le multiplexeur en longueur d'onde 16 permet aussi de combiner des signaux lumineux montants cheminant sur la branche T et sur la branche R pour obtenir des signaux lumineux montants cheminant sur la fibre optique 13.

Ici, la branche R est raccordée à une première fibre intermédiaire 21 qui est connectée au premier port aval 18 du multiplexeur en longueur d'onde 16. La branche R transporte au moins les longueurs d'onde 1310nm et 1490nm correspondant au standard de communication optique G-PON. La branche T est raccordée à une deuxième fibre intermédiaire 22 qui est connectée au deuxième port aval 19 du multiplexeur en longueur d'onde 16. La branche T transporte au moins les longueurs d'onde 1270nm et 1577nm correspondant au standard de communication optique XG-PON.

Le composant choisi est par exemple la référence WMMSAMGXGPONB00 du fabricant OPTIWORKS, dont les caractéristiques sont montrées sur la figure 4. Ce composant permet, par réflexion interne, le passage bidirectionnel sur la branche R (qui est raccordée à la première fibre intermédiaire 21) des signaux lumineux du système G-PON (plage de réflexion 1290 à 1560nm), avec une perte d'insertion limitée à 0,4dB. Ce composant permet aussi, par transmission, le passage bidirectionnel sur la branche T (qui est raccordée à la deuxième fibre intermédiaire 22) des signaux lumineux du système XG-PON (plages de transmission 1260 à 1280nm et 1575 à 1580nm) avec une perte d'insertion limitée à 0,7dB.

Le composant choisi pourrait aussi être la référence WMMSAMGXGPONA00 du fabricant OPTIWORKS. Ce composant permet, par réflexion interne, le passage bidirectionnel sur la branche R (qui serait alors raccordé à la deuxième fibre intermédiaire 22) des signaux lumineux du système XG-PON (plages de réflexion 1260 à 1280nm et 1525 à 1620nm), avec une perte d'insertion limitée à 0,4dB. Ce composant permet aussi, par transmission, le passage bidirectionnel sur la branche T (qui serait alors raccordée à la première fibre intermédiaire 21) des signaux lumineux du système G-PON (plages de transmission 1290 à 1330nm et 11480 à 1500nm) avec une perte d'insertion limitée à 0,7dB.

Il existe bien sûr d'autres implémentations possibles d'un tel multiplexeur en longueur d'onde, sous réserve de choisir les plages de transmission et de réflexion correspondant aux longueurs d'onde à séparer.

On note que l'utilisation d'un coupleur optique classique n'est pas envisageable car un tel coupleur, qui divise le signal lumineux en plusieurs parties, introduit une perte significative non compatible avec les composants mis en œuvre. Par exemple, un coupleur « 1 vers 2 » introduit une perte supérieure à 3dB alors même que la norme G-PON impose un niveau minimal de réception de -27dBm au raccord optique du terminal, et que les composants récepteurs existants ont une limite de sensibilité comprise entre -28 et -29dBm.

De même, l'utilisation d'un commutateur optique, qui viendrait aiguiller l'ensemble des signaux lumineux descendants cheminant sur la fibre optique, est difficilement envisageable à cause de son coût.

Le circuit de connexion 10 comporte de plus une pluralité d'interfaces optiques-électriques, en l'occurrence une première interface optique-électrique 24 et une deuxième interface optique-électrique 25. La première interface optique-électrique 24 et la deuxième interface optique-électrique 25 comprennent chacune un port optique 26 et un port électrique 27 qui comprend un accès d'émission 28 et un accès de réception 29.

Le port optique 26 de la première interface optique-électrique 24 est relié au premier port aval 18 du multiplexeur en longueur d'onde 16 (via la première fibre intermédiaire 21), et le port optique 26 de la deuxième interface optique-électrique 25 est relié au deuxième port aval 19 du multiplexeur en longueur d'onde 16 (via la deuxième fibre intermédiaire 22).

La première interface optique-électrique 24 est compatible avec le standard G-PON et la deuxième interface optique-électrique 25 est compatible avec le standard XG-PON.

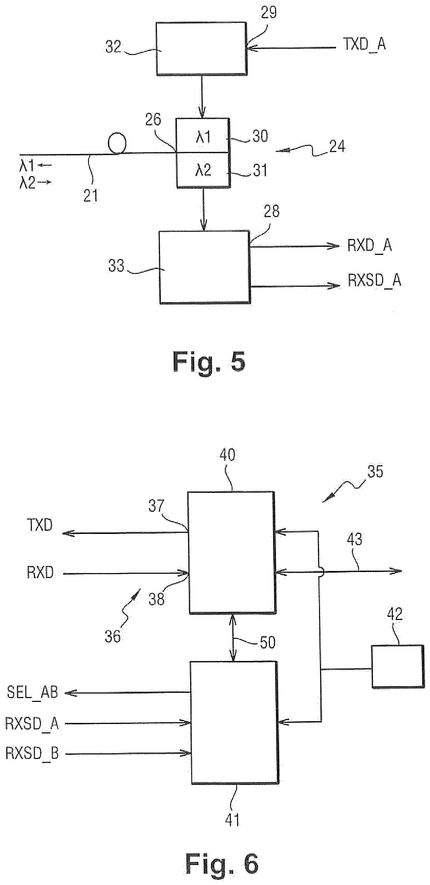

En référence à la figure 5, on décrit maintenant la première interface optique-électrique 24, la deuxième interface optique-électrique 25 étant semblable mais adaptée aux caractéristiques du standard XG-PON.

La première interface optique-électrique 24 comporte une diode laser 30, un photorécepteur, en l'occurrence une photodiode 31, un premier circuit d'adaptation 32 et un deuxième circuit d'adaptation 33.

Le premier circuit d'adaptation 32 reçoit, via l'accès de réception 29 du port électrique 27, des signaux électriques TXD_A correspondant aux données à transmettre vers le réseau opérateur 14 via la première fibre intermédiaire 21 et la fibre optique 13. Le premier circuit d'adaptation 32 (ou *driver*) pilote la diode laser 30 pour que celle-ci produise des signaux lumineux montants représentatifs des signaux électriques TXD_A et contenant les données à transmettre. Les signaux lumineux montants possèdent une longueur d'onde montante qui est comprise dans une plage de longueurs d'onde montantes prédéterminée. La plage de longueurs d'onde montantes prédéterminée est associée à la première interface optique-électrique 24 et correspond aux caractéristiques du standard G-PON. Ici, la longueur d'onde montante est égale à 1310nm.

La photodiode 31 reçoit quant à elle, via le port optique 26, des signaux lumineux descendants provenant du réseau opérateur 14 et ayant une longueur d'onde descendante qui est comprise dans une plage de longueurs d'onde descendantes prédéterminée. La plage de longueurs d'onde descendantes prédéterminée est associée à la première interface optique-électrique 24 et correspond aux caractéristiques du standard G-PON. Ici, la longueur d'onde descendante est égale à 1490nm.

La photodiode 31 transforme les signaux lumineux descendants en signaux électriques qui sont mis en forme par le deuxième circuit d'adaptation 33 pour obtenir des signaux électriques RXD_A. Les signaux électriques RXD_A sont transmis par le deuxième circuit d'adaptation 33 via l'accès d'émission 28 du port électrique 27 de la première interface optique-électrique 24.

Avantageusement, le deuxième circuit d'adaptation 33 comporte un dispositif de détection de présence sur la fibre optique 13 de signaux lumineux descendants ayant une longueur d'onde descendante comprise dans la plage de longueurs d'onde descendantes prédéterminée associée la première interface optique-électrique 24.

Dans le cas où de tels signaux lumineux descendants présentent une puissance supérieure à son seuil de sensibilité prédéterminé, la première interface optique-électrique 24 produit un signal de présence RXSD_A significatif de la présence desdits signaux lumineux descendants. Le signal de présence RXSD_A est placé dans un état prédéfini (par exemple un état logique égal à 1).

La diode laser 30 et la photodiode 31 sont ici intégrées, ainsi que d'autres composants liés à la mise en forme des signaux électriques et non décrits ici, dans un macro-composant, par exemple un BOSA portant la référence MB374-45-N4-GK-BW-M du fabriquant MENTECH, ou encore la référence PLDM586-428 du fabriquant ACCELINK, ou tout équivalent. Le premier circuit d'adaptation 32 et/ou le deuxième circuit d'adaptation 33 destinés à la mise en forme des signaux peuvent être intégrés dans un modèle de référence MO2099 du fabriquant MACOM, ou encore dans un modèle de référence BCM68901 du fabriquant BROADCOM, ou dans tout modèle équivalent.

Le circuit de connexion 10 comporte de plus un composant électrique de traitement.

Le composant électrique de traitement est ici un processeur 35, mais pourrait être un composant différent, par exemple un microcontrôleur, un FPGA, un ASIC, etc. Le processeur 35 est adapté à exécuter des instructions d'un programme pour réaliser les tâches qui lui sont dédiées.

Le processeur 35 assure la gestion du circuit de connexion 10.

En référence à la figure 6, le processeur 35 comporte un port de communication 36 comprenant un accès d'émission 37 et un accès de réception 38, un gestionnaire de protocole 40, un module de gestion 41 et une mémoire non volatile 42.

Le gestionnaire de protocole 40 est relié au port de communication 36. Le gestionnaire de protocole 40 met en œuvre, à partir d'instructions stockées dans la mémoire non volatile 42, la partie protocolaire correspondant à au moins un standard de communication optique pouvant être présent sur la fibre 13.

La passerelle Internet 11 met ainsi en relation, via le lien de communication 43 et grâce au processeur 35, les besoins de données de l'abonné avec les services proposés par l'opérateur au travers du réseau opérateur 14. Le lien de communication 43 est par exemple un lien Ethernet.

En particulier, le gestionnaire de protocole 40 produit les signaux électriques TXD via l'accès d'émission 37 du port de communication 36 et reçoit les signaux électriques RXD via l'accès de réception 38 du port de communication 36.

Le module de gestion 41 reçoit le signal de présence RXSD_A transmis par la première interface électrique-optique 24 et le signal de présence RXSD_B transmis par la deuxième interface électrique-optique 25, et génère un signal de sélection SEL_AB.

Le circuit de connexion 10 comporte de plus un commutateur 45.

Le commutateur 45 comporte un premier port amont 46, un deuxième port amont 47 et un port aval 48.

Le premier port amont 46 du commutateur 45 est relié au port électrique 27 de la première interface optique-électrique 24. Le deuxième port amont 47 du commutateur 45 est relié au port électrique 27 de la deuxième interface optique-électrique 25. Le port aval 48 du commutateur 45 est relié au port de communication 36 du processeur 35.

Le commutateur 45 est piloté par le processeur 35 qui est agencé pour sélectivement relier le port de communication 36 du processeur 35 au port électrique 27 de la première interface optique-électrique 24 ou au port électrique 27 de la deuxième interface optique-électrique 25. Le pilotage du commutateur 45 est réalisé grâce au signal de sélection SEL_AB qui est transmis par le processeur 35 au commutateur 45. Le commutateur 45 commute les signaux électriques TXD_A, RXD_A, TXD_B, RXD_B (et TXD et RXD) qui sont des signaux électriques rapides.

Lorsque le commutateur 45 relie le port de communication 36 du processeur 35 au port électrique 27 de la première interface optique-électrique 24, ce qui correspond par exemple à un état logique égal à 1 du signal de sélection SEL_AB, les signaux électriques TXD sont dirigés vers l'accès de réception 29 du port électrique 27 de la première interface optique-électrique 24 et deviennent donc les signaux électriques TXD_A, et les signaux électriques RXD_A sont dirigés vers l'accès de réception 38 du port de communication 36 du processeur 35 et deviennent donc les signaux électriques RXD.

Lorsque le commutateur 45 relie le port de communication 36 du processeur 35 au port électrique 27 de la deuxième interface optique-électrique 25, ce qui correspond par exemple à un état logique égal à 0 du signal de sélection SEL_AB, les signaux électriques TXD sont dirigés vers l'accès de réception 29 du port électrique 27 de la deuxième interface optique-électrique 25 et deviennent donc les signaux TXD_B, et les signaux électriques RXD_B sont dirigés vers l'accès de réception 38 du port de communication 36 du processeur 35 et deviennent donc les signaux électriques RXD.

Les caractéristiques du commutateur 45 sont sélectionnées en terme de bande passante, pour éviter une dégradation des signaux électriques. Par exemple, le commutateur 45 utilisé pour la partie transmission devra avoir une bande passante supérieure ou égale à 1.25GHz pour ne pas dégrader les signaux électriques mis en œuvre dans le sens montant du G-PON (1,2Gbps) et du XG-PON (2.5Gbps). Dans le même exemple, le commutateur 45 utilisé pour la partie réception devra avoir une bande passante supérieure ou égale à 5GHz pour ne pas dégrader les signaux électriques mis en oeuvre dans le sens descendant du XG-PON (2,5Gbps) et du XG-PON (10Gbps).

Par exemple, la référence PI3DBS12212A du fabriquant PERICOM ou un modèle équivalent peuvent être utilisés pour mettre en œuvre cette fonction.

Grâce au circuit de connexion selon l'invention 10, la passerelle Internet 11 est donc capable de communiquer avec le réseau opérateur 14 au moyen de plusieurs standards de communication optique sur une même fibre optique 13. Il convient donc de sélectionner correctement le standard de communication optique qui sera utilisé.

Généralement, lors de la souscription de son abonnement Internet, un abonné choisit une offre particulière dont les caractéristiques sont connues et définies (débit, standard de communication optique, volume de données, services ...) . Au cours du temps, les offres peuvent évoluer et l'abonné peut ainsi faire évoluer les caractéristiques de son abonnement.

De la même manière, un opérateur peut, au cours du temps, faire évoluer son infrastructure et ajouter ou remplacer des standards de communication optique sur la fibre optique arrivant jusqu'au domicile d'un abonné.

Dans ces deux cas, il est avantageux de mettre en œuvre un procédé de gestion de communication permettant d'aboutir à l'utilisation dans la passerelle Internet 11 du protocole associé au standard de communication optique correspondant au choix établi entre l'opérateur et l'abonné, ou à l'utilisation du protocole offrant les meilleures performances si aucun choix n'a été établi.

Le procédé de gestion de communication est mis en oeuvre dans le circuit de connexion 10. Le procédé de gestion de communication est réalisé à la mise sous tension de la passerelle Internet 11, ou bien suite à un redémarrage imposé par l'opérateur suivant une opération de maintenance, ou bien suite à une mise à jour de la passerelle Internet 11.

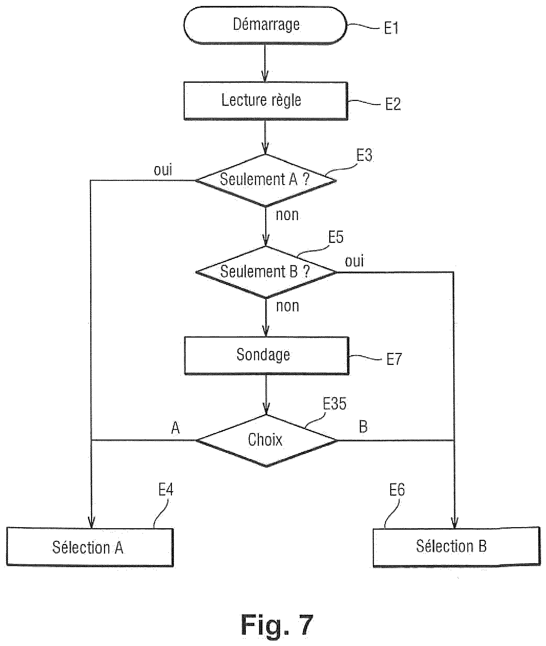

On décrit les phases et les étapes de ce procédé de gestion de communication en référence aux figures 7 à 10.

En référence à la figure 7, le procédé de gestion de communication comporte tout d'abord une étape de démarrage E1.

Puis, le procédé de gestion de communication comporte une phase de lecture E2. Cette phase de lecture comprend l'étape de vérifier si une règle de connexion, selon laquelle un unique standard de communication optique doit être utilisé, est stockée dans la mémoire non volatile 42 du processeur 35.

Cette règle de connexion peut avoir été chargée lors de la fabrication de la passerelle Internet 11, ou injectée par l'opérateur au cours d'une utilisation précédente durant laquelle la passerelle Internet 11 a été en communication avec le réseau opérateur 14. Cette opération de configuration à distance est communément mise en oeuvre au moyen du protocole normalisé TR069.

Ici, on vérifie si seul le standard G-PON doit être utilisé (étape E3). Si c'est le cas, le procédé de gestion de communication comprend une phase de sélection E4 qui comprend l'étape de faire piloter le commutateur 45 par le processeur 35 de manière à sélectionner la première interface optique-électrique 24 qui est compatible avec le standard G-PON. Le commutateur 45 relie le port de communication 36 du processeur 35 au port électrique 27 de la première interface optique-électrique 24.

On vérifie aussi si seul le standard XG-PON doit être utilisé (étape E5) . Si c'est le cas, le procédé de gestion de communication comprend une phase de sélection E6 qui comprend l'étape de faire piloter le commutateur 45 par le processeur 35 de manière à sélectionner la deuxième interface optique-électrique 25 qui est compatible avec le standard XG-PON. Le commutateur 45 relie le port de communication 36 du processeur 35 au port électrique 27 de la deuxième interface optique-électrique 25.

On peut prévoir de laisser à la passerelle Internet 11 le choix du standard de communication optique parmi ceux possiblement présents sur la fibre optique 13. Dans ce cas, suite à la phase de lecture, le procédé de communication comporte une phase de sondage E7 destinée à sonder la fibre optique 13 pour détecter les différents standards de communication optique présents.

La phase de sondage E7 consiste tout d'abord à tester successivement, au travers des différentes interfaces optiques-électriques présentes dans le circuit de connexion 10 de la passerelle Internet 11, la présence d'un standard de communication optique ayant des caractéristiques connues.

Les standards de communication optique sur fibre optique sont agencés de telle manière que la passerelle est esclave de l'OLT auquel elle se raccorde. En d'autres termes, l'OLT diffuse en permanence des signaux lumineux contenant l'ensemble des données utiles à destination de l'ensemble des abonnés, ainsi que des données de synchronisation et des données de contrôle. La passerelle Internet 11 doit d'abord détecter (signal de présence RXSD) puis se synchroniser (signaux électriques RXD) sur les signaux transmis par l'OLT avant de pouvoir comprendre et exécuter les opérations imposées par le contrôle. La passerelle Internet 11 ne transmet des signaux lumineux montants, générés à partir des signaux électriques TXD et à destination de l'OLT, que lorsque celui-ci l'impose. En dehors de ces périodes (salves), la passerelle Internet doit rester muette et ne transmettre aucun signal lumineux.

La phase de sondage comprend les étapes, mises en œuvre successivement pour chaque interface optique-électrique, de détecter la présence sur la fibre optique de signaux lumineux descendants conformes au standard de communication optique avec lequel est compatible ladite interface optique-électrique.

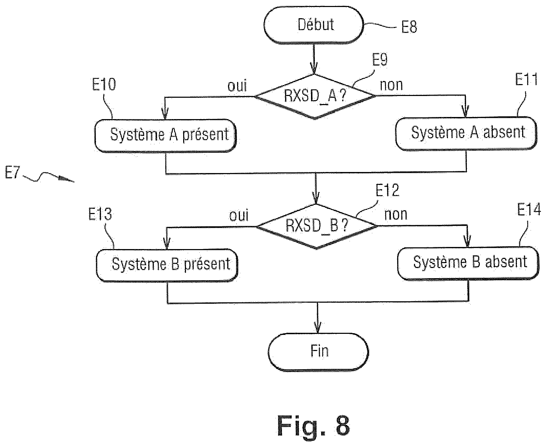

Ainsi, en référence à la figure 8, suite à une étape de démarrage E8, la phase de sondage E7 comporte l'étape de lire le signal de présence RXSD_A (étape E9). Si le signal de présence RXSD_A est placé dans l'état significatif de la présence de signaux lumineux descendants conformes au standard G-PON, le processeur 35 en déduit que le standard G-PON est présent sur la fibre optique 13 (étape E10). Sinon, le processeur en déduit que le standard G-PON est absent (étape E11).

Puis, la phase de sondage comporte l'étape de lire le signal de présence RXSD_B (étape E12). Si le signal de présence RXSD_B est placé dans l'état significatif de la présence de signaux lumineux descendants conformes au standard XG-PON, le processeur 35 en déduit que le standard XG-PON est présent sur la fibre optique 13 (étape E13). Sinon, le processeur 35 en déduit que le standard XG-PON est absent (étape E14).

On note toutefois qu'il existe différent standards de communication optique utilisant des signaux lumineux dont les longueurs d'onde sont identiques, mais pour lesquels d'autres caractéristiques peuvent être différentes. Par exemple, les standard XG-PON et XGS-PON (*eXtended Gigabit Symetrical Passive Optical Network*) partagent les mêmes longueurs d'onde (1270nm dans le sens montant et 1577nm dans le sens descendant). Ces standards partagent également les caractéristiques de débit et de protocole dans le sens descendant (lOGbps), mais dans le sens montant, le standard XGS-PON permet un débit de 10Gbps au lieu du débit de 2.5Gbps permis par le système XG-PON. Dans ce cas, le sondage devra être poussé pour permettre de différencier les standards de communication optique.

A cet effet, après reconnaissance au moyen du signal de présence RXSD de la présence de signaux lumineux descendants dans une longueur d'onde susceptible de supporter plusieurs standards de communication optique, il peut être avantageux de procéder à la reconnaissance physique du standard de communication optique.

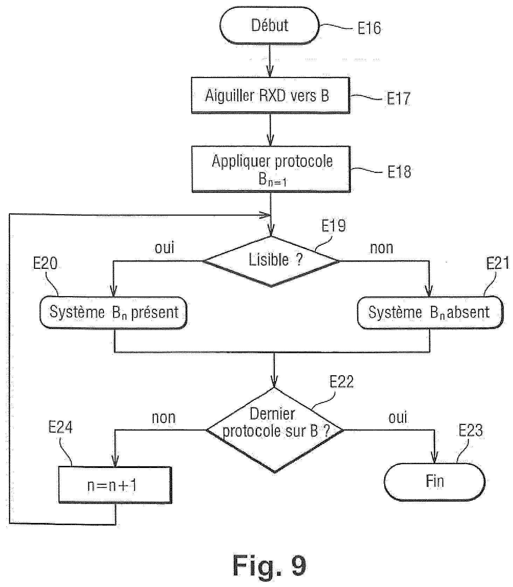

En référence à la figure 9, si des signaux lumineux descendants possiblement conformes à plusieurs standards de communication optique sont détectés, la phase de sondage E7 comporte en outre une première phase de sondage complémentaire comprenant les étapes, mises en oeuvre successivement pour chacun desdits standards de communication optique, de tenter de lire des signaux électriques représentatifs du signaux lumineux descendants conformément audit standard de communication optique, de manière à déterminer le standard de communication optique correct auquel sont conformes les signaux lumineux descendants.

La première phase de sondage complémentaire comporte une étape de démarrage E16. Puis, si le signal de présence RXSD_B est placé dans l'état significatif de la présence d'un signal lumineux descendant conforme au standard XG-PON, la première phase de sondage complémentaire comporte l'étape de relier le port de communication 36 du processeur 37 au port électrique 27 de la deuxième interface optique-électrique 25 : les signaux électriques RXD sont aiguillés vers la deuxième interface optique-électrique 25 (étape E17).

Puis, le module de gestion 41 du processeur 35 impose au gestionnaire de protocole 40, via des signaux internes 50 (visibles sur la figure 6), d'appliquer aux signaux électriques RXD le protocole associé au premier standard de communication optique auquel sont conformes les signaux lumineux descendants (étape E18).

La variable n est initialisée à 1.

Le gestionnaire de protocole 40 reporte alors au module de gestion 41, via les signaux internes 50, le succès ou l'échec de la tentative de reconnaissance.

On vérifie si les signaux électriques RXD sont lisibles par le protocole du premier standard de communication optique (étape E19). Si c'est le cas, on détecte que celui-ci est présent sur la fibre optique 13 (étape E20). Sinon, on détecte que celui-ci est absent (étape E21).

On vérifie si le premier standard de communication optique est le dernier standard potentiellement compatible (étape E22).

Si c'est le cas, la première phase de sondage complémentaire prend fin (étape E23).

Sinon, la variable n est incrémentée (étape E24) et les étapes ci-dessus sont répétées pour le deuxième standard de communication optique, le troisième standard de communication optique, etc..., jusqu'au dernier standard de communication optique potentiellement compatible.

Il est aussi possible de tenter d'établir une connexion complète avec l'OLT en utilisant la totalité du protocole, après que le gestionnaire de protocole ait réussi à reconnaitre les caractéristiques de synchronisation et de contrôle lui permettant de valider la présence physique du standard de communication optique. Cela permet de vérifier complètement la validité du lien et des autorisations entre la passerelle Internet 11 de l'utilisateur et l'OLT correspondant mis en œuvre par l'opérateur.

Ainsi, si des signaux lumineux descendants possiblement conformes à plusieurs standards de communication optique sont détectés, la phase de sondage E7 comporte une deuxième phase de sondage complémentaire comprenant les étapes, mises en œuvre successivement pour chacun desdits standards de communication optique, de tenter de mettre en œuvre une connexion, conforme audit standard de communication optique, entre le processeur et un OLT situé en amont de la fibre optique, de manière à déterminer le standard de communication optique correct auquel sont conformes les signaux lumineux descendants.

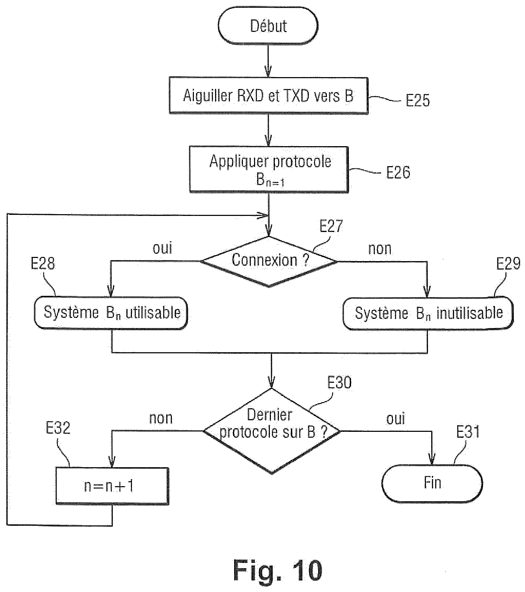

En référence à la figure 10, si le signal de présence RXSD_B est placé dans l'état défini significatif de la présence d'un signal lumineux descendant conforme au standard XG-PON, la deuxième phase de sondage complémentaire comporte l'étape de relier le port de communication 36 du processeur 35 au port électrique 27 de la deuxième interface optique-électrique 25 : les signaux électriques RXD et TXD sont aiguillés vers la deuxième interface optique-électrique 25 (étape E25).

Puis, le module de gestion 41 du processeur 35 impose au gestionnaire de protocole 40, via des signaux internes 50, d'appliquer aux signaux électriques RXD le protocole associé au premier standard de communication optique auquel sont conformes les signaux lumineux descendants (étape E26).

La variable n est initialisée à 1.

Le gestionnaire de protocole 40 reporte alors au module de gestion 41, via les signaux internes 50, le succès ou l'échec de la tentative de connexion.

On vérifie si une connexion est réalisée selon le protocole du premier standard de communication optique (étape E27). Si c'est le cas, on détecte que celui-ci est utilisable sur la fibre optique 13 (étape E28). Sinon, on détecte que celui-ci est inutilisable (étape E29).

On vérifie si le premier standard de communication optique est le dernier standard potentiellement compatible (étape E30).

Si c'est le cas, la deuxième phase de sondage complémentaire prend fin (étape E31).

Sinon, la variable n est incrémentée (étape E32) et les étapes ci-dessus sont répétées pour le deuxième standard de communication optique, le troisième standard de communication optique, etc..., jusqu'au dernier standard de communication optique potentiellement compatible.

La sortie de la phase de sondage E7 comprend donc, pour chaque interface optique-électrique, une information décrivant la présence ou non de signaux lumineux descendants montrant la présence d'au moins un standard de communication optique correspondant à cette longueur d'onde, éventuellement une information donnant la liste des standards de communication optique reconnus à partir de leurs signaux de synchronisation et de protocole, et éventuellement une information donnant la liste des standards de communication optique ayant permis d'aboutir à la connexion physique avec l'OLT de l'opérateur.

Puis, en référence de nouveau à la figure 7, le procédé de communication comporte une phase de choix (étape E35).

A partir des informations émanant de la phase de sondage, il est possible d'effectuer un choix.

En effet, l'ensemble des standards de communication optique présents et éventuellement utilisables sont connus.

Les caractéristiques natives de débit de chacun des standards de communication optique sont définies par les normes correspondantes, il est donc facile de classer les standards de communication optique détectés lors la phase de sondage en fonction du débit proposé.

La phase de choix comprend donc l'étape de choisir un standard de communication optique particulier à partir du résultat de la phase de sondage.

Puis, le procédé de communication comporte les phases de sélection E4 et E6 consistant à relier le port de communication du processeur au port électrique de l'interface optique-électrique compatible avec le standard G-PON ou XG-PON.

Pour ces phases de sélection, le module de gestion 41 du processeur 35 doit aiguiller, au moyen du signal de sélection SEL_AB, les signaux électriques RXD_A ou RXD_B et TXD_A ou TXD_B de l'interface optique-électrique choisie vers les signaux électriques RXD et TXD du processeur. Dans le même temps, le module de gestion 41 doit imposer au gestionnaire de protocole 40, au moyen des signaux internes 50, d'exécuter le protocole choisi, ce qui aboutit à l'établissement de la communication avec L'OLT.

On fait donc piloter le commutateur 45 par le processeur 35 de manière à sélectionner l'interface optique-électrique compatible avec le standard de communication optique choisi.

Bien entendu, l'invention n'est pas limitée au mode de réalisation décrit mais englobe toute variante entrant dans le champ de l'invention telle que définie par les revendications.

On a décrit ici que le circuit de connexion comprend une première interface optique-électrique 24 compatible avec le standard de communication optique G-PON et une deuxième interface optique-électrique 25 compatible avec le standard de communication optique XG-PON. Bien sûr, le circuit de connexion pourrait comprendre des interfaces optiques-électriques différentes, par exemple une troisième interface optique-électrique compatible avec le standard de communication optique XGS-PON.

## Revendications

1. Circuit de connexion agencé pour raccorder au moins un équipement électrique (12) situé en aval du circuit de connexion (10), à une fibre optique (13) située en amont du circuit de connexion et sur laquelle sont susceptibles de cheminer des signaux lumineux de longueurs d'onde différentes et conformes à des standards de communication optique différents, le circuit de connexion comportant un multiplexeur en longueur d'onde (16) comprenant un port amont (17) destiné à être relié à la fibre optique et une pluralité de ports aval (18, 19), **caractérisé par** une pluralité d'interfaces optiques-électriques (24, 25) compatibles chacune avec au moins un standard de communication optique et ayant chacune un port optique (26) relié à l'un des ports aval du multiplexeur en longueur d'onde et un port électrique (27), un composant électrique de traitement (35) comprenant un port de communication (36) via lequel le composant électrique de traitement est agencé pour émettre et/ou recevoir des signaux électrique (TXD, RXD), et un commutateur (45) piloté par le composant électrique de traitement et agencé pour sélectivement relier le port de communication du composant électrique de traitement à un port électrique de l'une des interfaces optiques-électriques, le composant électrique de traitement étant positionné en aval du commutateur.

2. Circuit de connexion selon la revendication 1, dans lequel chaque interface optique-électrique (24, 25) est agencée pour détecter la présence sur la fibre optique de signaux lumineux descendants ayant une longueur d'onde descendante comprise dans une plage de longueurs d'onde descendantes prédéterminée associée à ladite interface optique-électrique, pour produire un signal de présence (RXSD_A, RXSD_B) significatif de la présence desdits signaux lumineux descendants, et pour transmettre le signal de présence au composant électrique de traitement.

3. Circuit de connexion selon la revendication 2, dans lequel le composant électrique de traitement (35) est agencé pour piloter le commutateur (45) de sorte que, lorsque le composant électrique de traitement reçoit un signal de présence provenant d'une interface optique-électrique, le commutateur relie le port de communication du composant électrique de traitement au port électrique de ladite interface optique-électrique.

4. Circuit de connexion selon l'une des revendications précédentes, dans lequel les interfaces optiques-électriques comprennent une première interface optique-électrique (24) compatible avec le standard de communication optique G-PON et/ou une deuxième interface optique-électrique (25) compatible avec le standard de communication optique XG-PON, et/ou une troisième interface optique-électrique compatible avec le standard de communication optique XGS-PON.

5. Circuit de connexion selon l'une des revendications précédentes, dans lequel le composant électrique de traitement comporte une mémoire non volatile (42) agencée de sorte qu'une règle de connexion puisse être stockée dans la mémoire non volatile, le composant électrique de traitement étant agencé pour lire la règle de connexion et pour piloter le commutateur (45) en fonction de la règle de connexion.

6. Passerelle Internet (11) comportant un circuit de connexion (10) selon l'une des revendications précédentes.

7. Procédé de gestion de communication mis en œuvre dans un circuit de connexion selon l'une des revendications 1 à 5, comportant une phase de sondage (E7) comprenant les étapes, mises en œuvre successivement pour chaque interface optique-électrique (24, 25), de tenter de détecter la présence sur la fibre optique (13) de signaux lumineux descendants conformes à un standard de communication optique avec lequel est compatible ladite interface optique-électrique, une phase de choix (E35) comprenant l'étape de choisir un standard de communication optique particulier à partir d'un résultat de la phase de sondage, et une phase de sélection (E4, E5) comprenant l'étape de faire piloter le commutateur par le composant électrique de traitement de manière à relier le port de communication du composant électrique de traitement au port électrique d'une interface optique-électrique compatible avec le standard de communication optique particulier choisi.

8. Procédé de gestion de communication selon la revendication 7, dans lequel, au cours de la phase de sondage (E7), si des signaux lumineux descendants possiblement conformes à plusieurs standards de communication optique sont détectés, la phase de sondage comporte en outre les étapes, mises en œuvre successivement pour chacun desdits standards de communication optique, de tenter de lire des signaux électriques représentatifs des signaux lumineux descendants conformément audit standard de communication optique, de manière à déterminer le standard de communication optique correct auquel sont conformes les signaux lumineux descendants.

9. Procédé de gestion de communication selon la revendication 7, dans lequel, au cours de la phase de sondage (E7), si des signaux lumineux descendants possiblement conformes à plusieurs standards de communication optique sont détectés, la phase de sondage comporte en outre les étapes, mises en œuvre successivement pour chacun desdits standards de communication optique, de tenter de mettre en œuvre une connexion conforme audit standard de communication optique entre le composant électrique de traitement et un équipement de terminaison situé en amont de la fibre optique, de manière à déterminer le standard de communication optique correct auquel sont conformes les signaux lumineux descendants.

10. Procédé de gestion de communication selon l'une des revendications 7 à 9, comportant une phase de lecture (E2), préalable à la phase de sondage, comprenant l'étape de vérifier si une règle de connexion, selon laquelle un unique standard de communication optique doit être utilisé, est stockée dans une mémoire non volatile (42) du composant électrique de traitement (35), et dans lequel, si une telle règle de connexion existe, la phase de choix consiste à choisir l'unique standard de communication optique.

11. Programme d'ordinateur comprenant des instructions pour mettre en œuvre, par un composant électrique de traitement d'une passerelle Internet selon la revendication 6, un procédé de gestion de communication selon l'une des revendications 7 à 10.

12. Moyens de stockage, **caractérisés en ce qu'**ils stockent un programme d'ordinateur comprenant des instructions pour mettre en œuvre, par un composant électrique de traitement d'une passerelle Internet selon la revendication 6, un procédé de gestion de communication selon l'une des revendications 7 à 10.

## Patentansprüche

1. Verbindungsschaltung, die ausgebildet ist, um mindestens eine elektrische Ausrüstung (12), die sich stromabwärts der Verbindungsschaltung (10) befindet, mit einer optischen Faser (13) zu verbinden, die sich stromaufwärts der Verbindungsschaltung befindet und auf der Lichtsignale unterschiedlicher Wellenlängen und gemäß unterschiedlichen optischen Kommunikationsstandards geführt werden können, wobei die Verbindungsschaltung einen Wellenlängenmultiplexer (16) umfasst, der einen stromaufwärtigen Anschluss (17) enthält, der dazu bestimmt ist, mit der optischen Faser verbunden zu werden, sowie eine Vielzahl von stromabwärtigen Anschlüssen (18, 19), **gekennzeichnet durch** eine Vielzahl von optisch-elektrischen Schnittstellen (24, 25), die jeweils mit mindestens einem optischen Kommunikationsstandard kompatibel sind und jeweils einen optischen Anschluss (26) haben, der mit einem der stromabwärtigen Anschlüsse des Wellenlängenmultiplexers verbunden ist, sowie einen elektrischen Anschluss (27), wobei eine elektrische Verarbeitungskomponente (35) einen Kommunikationsanschluss (36) umfasst, über den die elektrische Verarbeitungskomponente ausgebildet ist, um elektrische Signale (TXD, RXD) zu senden und/oder zu empfangen, und einen Schalter (45), der von der elektrischen Verarbeitungskomponente gesteuert wird und ausgebildet ist, um den Kommunikationsanschluss der elektrischen Verarbeitungskomponente selektiv mit einem elektrischen Anschluss einer der optisch-elektrischen Schnittstellen zu verbinden, wobei die elektrische Verarbeitungskomponente stromabwärts des Schalters angeordnet ist.

2. Verbindungsschaltung nach Anspruch 1, bei der jede optisch-elektrische Schnittstelle (24, 25) ausgebildet ist, um das Vorhandensein auf der optischen Faser von Downstream-Lichtsignalen zu erfassen, die eine Downstream-Wellenlänge haben, die in einem vorbestimmten Bereich von Downstream-Wellenlängen enthalten ist, der mit der genannten optisch-elektrischen Schnittstelle verbunden ist, um ein Präsenzsignal (RXSD_A, RXSD_B) zu erzeugen, das bezeichnend für das Vorhandensein der genannten Downstream-Lichtsignale ist, und um das Präsenzsignal zur elektrischen Verarbeitungskomponente zu übertragen.

3. Verbindungsschaltung nach Anspruch 2, bei der die elektrische Verarbeitungskomponente (35) ausgebildet ist, um den Schalter (45) derart zu steuern, dass, wenn die elektrische Verarbeitungskomponente ein Präsenzsignal empfängt, das aus einer optisch-elektrischen Schnittstelle stammt, der Schalter den Kommunikationsanschluss der elektrischen Verarbeitungskomponente mit dem elektrischen Anschluss der genannten optisch-elektrischen Schnittstelle verbindet.

4. Verbindungsschaltung nach einem der vorhergehenden Ansprüche, bei der die optisch-elektrischen Schnittstellen eine erste optisch-elektrische Schnittstelle (24) umfassen, die mit dem G-PON optischen Kommunikationsstandard kompatibel ist, und/oder eine zweite optisch-elektrische Schnittstelle (25), die mit dem XG-PON optischen Kommunikationsstandard kompatibel ist, und/oder eine dritte optisch-elektrische Schnittstelle, die mit dem XGS-PON optischen Kommunikationsstandard kompatibel ist.

5. Verbindungsschaltung nach einem der vorhergehenden Ansprüche, bei der die elektrische Verarbeitungskomponente einen nicht-flüchtigen Speicher (42) umfasst, der derart ausgebildet ist, dass eine Verbindungsregel in dem nicht-flüchtigen Speicher gespeichert werden kann, wobei die elektrische Verarbeitungskomponente ausgebildet ist, um die Verbindungsregel zu lesen und um den Schalter (45) in Abhängigkeit von der Verbindungsregel zu steuern.

6. Internet-Gateway (11), umfassend eine Verbindungsschaltung (10) nach einem der vorhergehenden Ansprüche.

7. Kommunikationsverwaltungsverfahren, das in einer Verbindungsschaltung nach einem der Ansprüche 1 bis 5 verwendet wird, umfassend eine Erhebungsphase (E7), welche, nacheinander durchgeführt für jede optisch-elektrische Schnittstelle, die Schritte des Versuchens des Erfassens des Vorhandenseins auf der optischen Faser (13) von Downstream-Lichtsignalen gemäß einem optischen Kommunikationsstandard umfasst, mit dem die genannte optisch-elektrische Schnittstelle kompatibel ist, eine Auswahlphase (E35), die den Schritt des Auswählens eines besonderen optischen Kommunikationsstandards anhand eines Ergebnisses der Erhebungsphase umfasst, und eine Selektionsphase (E4, E5), die den Schritt des Steuerns des Schalters durch die elektrische Verarbeitungskomponente umfasst, derart, dass der Kommunikationsanschluss der elektrischen Verarbeitungskomponente mit dem elektrischen Anschluss einer optisch-elektrischen Schnittstelle verbunden wird, die mit dem ausgewählten besonderen optischen Kommunikationsstandard kompatibel ist.

8. Kommunikationsverwaltungsverfahren nach Anspruch 7, bei dem während der Erhebungsphase (E7), wenn Downstream-Lichtsignale, die möglicherweise mehreren optischen Kommunikationsstandards entsprechen, erfasst werden, die Erhebungsphase ferner, nacheinander durchgeführt für jeden der genannten optischen Kommunikationsstandards, die Schritte des Versuchens des Lesens der elektrischen Signale umfasst, die repräsentativ für die Downstream-Lichtsignale gemäß dem genannten optischen Kommunikationsstandard sind, derart, dass der korrekte optische Kommunikationsstandard bestimmt wird, dem die Downstream-Lichtsignale entsprechen.

9. Kommunikationsverwaltungsverfahren nach Anspruch 7, bei dem während der Erhebungsphase (E7), wenn Downstream-Lichtsignale, die möglicherweise mehreren optischen Kommunikationsstandards entsprechen, erfasst werden, die Erhebungsphase ferner, nacheinander durchgeführt für jeden der genannten optischen Kommunikationsstandards, die Schritte des Versuchens des Herstellens einer Verbindung gemäß dem genannten optischen Kommunikationsstandard zwischen der elektrischen Verarbeitungskomponente und einer Endausrüstung umfasst, die sich stromaufwärts der optischen Faser befindet, derart, dass der korrekte optische Kommunikationsstandard bestimmt wird, dem die Downstream-Lichtsignale entsprechen.

10. Kommunikationsverwaltungsverfahren nach einem der Ansprüche 7 bis 9, umfassend vor der Erhebungsphase eine Lesephase (E2), die den Schritt des Verifizierens umfasst, ob eine Verbindungsregel, gemäß der ein einziger optischer Kommunikationsstandard verwendet werden soll, in einem nicht-flüchtigen Speicher (42) der elektrischen Verarbeitungskomponente (35) gespeichert ist, und bei dem, wenn eine solche Verbindungsregel vorhanden ist, die Auswahlphase darin besteht, den einzigen optischen Kommunikationsstandard auszuwählen.

11. Computerprogramm, umfassend Anweisungen zum Durchführen eines Kommunikationsverwaltungsverfahrens nach einem der Ansprüche 7 bis 10 mittels einer elektrischen Verarbeitungskomponente eines Internet-Gateways nach Anspruch 6.

12. Speichermittel, **dadurch gekennzeichnet, dass** sie ein Computerprogramm speichern, das Anweisungen zum Durchführen eines Kommunikationsverwaltungsverfahrens nach einem der Ansprüche 7 bis 10 mittels einer elektrischen Verarbeitungskomponente eines Internet-Gateways nach Anspruch 6 umfassen.

## Claims

1. A connection circuit arranged to connect at least one piece of electrical equipment (12) situated downstream from the connection circuit (10) to an optical fiber (13) situated upstream from the connection circuit and that might convey light signals of different wavelengths and in compliance with different optical communication standards, the connection circuit comprising a wavelength multiplexer (16) having an upstream port (17) for connection to the optical fiber and a plurality of downstream ports (18, 19), **characterized by** a plurality of optical-electrical interfaces (24, 25) each compatible with at least one optical communication standard and each having both an optical port (26) connected to one of the downstream ports of the wavelength multiplexer and also an electrical port (27), an electrical processor component (35) having a communication port (36) via which the electrical processor component is arranged to emit and/or receive light signals (TXD, RXD), and a switch (45) controlled by the electrical processor component and arranged to connect the communication port of the electrical processor component selectively to an electrical port of one of the optical-electrical interfaces, the electrical processor component being situated downstream from the switch.

2. A connection circuit according to claim 1, wherein each optical-electrical interface (24, 25) is arranged to detect the presence on the optical fiber of downlink light signals having a downlink wavelength lying within a predetermined range of downlink wavelengths associated with said optical-electrical interface in order to produce a presence signal (RXSD_A, RXSD_B) representative of the presence of said downlink light signals, and to transmit the presence signal to the electrical processor component.

3. A connection circuit according to claim 2, wherein the electrical processor component (35) is arranged to control the switch (45) in such a manner that, when the electrical processor component receives a presence signal coming from an optical-electrical interface, the switch connects the communication port of the electrical processor component to the electrical port of said optical-electrical interface.

4. A connection circuit according to any preceding claim, wherein the optical-electrical interfaces comprise a first optical-electrical interface (24) compatible with the G-PON optical communication standard and/or a second optical-electrical interface (25) compatible with the XG-PON optical communication standard, and/or a third optical-electrical interface compatible with the XGS-PON optical communication standard.

5. A connection circuit according to any preceding claim, wherein the electrical processor component includes a non-volatile memory (42) arranged so that a connection rule can be stored in the non-volatile memory, the electrical processor component being arranged to read the connection rule in order to control the switch (45) as a function of the connection rule.

6. An Internet gateway (11) including a connection circuit (10) according to any preceding claim.

7. A communication management method performed in a connection circuit according to any one of claims 1 to 5, the method including a probe stage (E7) comprising steps, that are performed in succession for each optical-electrical interface (24, 25), of attempting to detect the presence on the optical fiber (13) of downlink light signals in compliance with an optical communication standard with which said optical-electrical interface is compatible, a designation stage (E35) comprising the step of designating a particular optical communication standard from a result of the probe stage, and a selection stage (E4, E5) comprising the step of the electrical processor component operating the switch so as to connect the communication port of the electrical processor component to the electrical port of an optical-electrical interface that is compatible with the particular optical communication standard that has been designated.

8. A communication management method according to claim 7, wherein, during the probe stage (E7), if downlink light signals potentially compatible with a plurality of optical communication standards are detected, the probe stage further comprises steps, that are performed in succession for each of said optical communication standards, of attempting to read electrical signals representative of the downlink light signals in compliance with said optical communication standards, so as to determine the correct optical communication standards with which the downlink light signals comply.

9. A communication management method according to claim 7, wherein during the probe stage (E7), if downlink light signals potentially in compliance with a plurality of optical communication standards are detected, the probe stage further includes steps, performed in succession for each of said optical communication standards, of attempting to establish a connection in compliance with said optical communication standards between the electrical processor component and a piece of termination equipment situated upstream from the optical fiber so as to determine the correct optical communication standard with which the downlink light signals comply.

10. A communication management method according to any one of claims 7 to 9, including a read stage (E2) prior to the probe stage, the read stage comprising the step of verifying whether a connection rule is stored in a non-volatile memory (42) of the electrical processor component (35) specifying a single optical communication standard that is to be used, and wherein, if such a connection rule exists, the designation stage consists in selecting the sole optical communication standard.

11. A computer program comprising instructions enabling an electrical processor component of an Internet gateway according to claim 6 to perform a communication management method according to any one of claims 7 to 10.

12. Storage means, **characterized in that** they store a computer program comprising instructions enabling an electrical processor component of an Internet gateway according to claim 6 to perform a communication management method according to any one of claims 7 to 10.
